# EUROPÄISCHE PATENTSCHRIFT

(11) **EP 2 673 221 B1**
(45) Veröffentlichungstag und Bekanntmachung des Hinweises auf die Patenterteilung: **08.03.2017**
(21) Anmeldenummer: 12702183.0
(22) Anmeldetag: 26.01.2012
(51) Int. Cl.: B65G 29/00, B65G 47/84, B67C 7/00

(54) **BEHÄLTERBEHANDLUNGSMASCHINE MIT VERSCHIEBBAREN TRANSPORTSTERNEN**
CONTAINER HANDLING MACHINE HAVING MOVABLE TRANSPORT STARS
MACHINE DE TRAITEMENT DE RÉCIPIENTS À ÉTOILES DE TRANSPORT MOBILES

(30) Priorität: 10.02.2011 DE 102011010955; 10.02.2011 DE 102011010954
(43) Veröffentlichungstag der Anmeldung: 18.12.2013
(73) Patentinhaber: KHS GmbH, 44143 Dortmund (DE)
(72) Erfinder: KRULITSCH, Dieter-Rudolf, 55545 Bad Kreuznach (DE); BEISEL, Michael, 55444 Schöneberg (DE)
(86) Internationale Anmeldenummer: PCT/EP2012/000333
(87) Internationale Veröffentlichungsnummer: WO 2012/107172

(56) Entgegenhaltungen:
- WO-A1-2010/013263
- DE-U1-202007 017 932

## Beschreibung

Die Erfindung betrifft eine Behälterbehandlungsmaschine für Flaschen oder dergleichen Behälter, aufweisend Transportsterne und zumindest einen Hauptstern, an welchem einen Vielzahl von Behandlungsstationen angeordnet sind, wobei die jeweiligen Sterne eine Vielzahl von Halte- und/oder Greifpositionen für jeweils einen Behälter aufweisen, wobei zwischen benachbarten Sternen und/oder Behandlungsmaschinen mindestens eine Behälterübergabestation vorhanden ist.

Behandlungsmaschinen dieser Art sind in unterschiedlichen Ausführungen bekannt, insbesondere auch als Füllmaschinen, Etikettiermaschinen, Inspektions-maschinen sowie als Rinser. Die Zufuhr und Abfuhr von Flaschen oder dergleichen Behälter erfolgt u.a. über Sterne. Eingangs genannte Behälter können beispielsweise als Flaschen für Flüssigkeiten, beispielsweise für Getränke verwendet werden. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind.

Vor Betriebsbeginn muss die Behälterübergabestation bzw. der jeweilige Flaschenübergabepunkt von dem einen Stern auf den anderen Stern auf Teilung und/oder Teilkreis und/oder Höhe eingestellt werden. Nachteilig hierbei ist insbesondere, dass derartige Einstellvorgänge eine Produktionsunterbrechung darstellen und Änderungen die sich während des Betriebs der Maschine ergeben, insbesondere bei Wärmedehnung und/oder einem Flaschenformatteilwechsel, nicht berücksichtigt werden. Insbesondere die Wärmeausdehnung bei großen Füllerkarussellen (z.B. "Heiß- und Kaltfüller über 3 m Durchmesser") führt dazu, dass sich der Teilkreisdurchmesser um mehrere Millimeter (z.B. Kaltfüllen mit 6°C und Heißfüllen mit 90°C) verändert. Aber auch die normale "betriebsbedingte" Erwärmung der Karusselle verändert die Übergabesituation und erfordert ein regelmäßiges Ein-/Nachstellen der Flaschenübergaben, die auf den Betriebspunkt/-temperatur abgestimmt sein muss.

Die DE 10 2008 023 776 A1 offenbart eine gattungsgemäße Behandlungsmaschine für Flaschen oder dergleichen Behälter, mit einem Rotor bzw. umlaufenden Hauptstern, an dem mehrere Behandlungsstationen angeordnet sind. Um die Lagerung des Hauptsterns bei ausreichender Stabilität und reduzierten Kosten zu realisieren, schlägt die DE 10 2008 023 776 A1 vor, dass die Lagerung des Rotors über mehrere, um die Maschinenachse verteilt angeordnete und die Lageranordnung bildende Rollen erfolgt. Die DE 10 2008 023 776 A1 offenbart am Rande, Lager der Rollen außerhalb eines festen Teilbereiches beweglich auszuführen, so dass ein Ausgleich bei Änderungen des Rotordurchmessers durch Wärmeausdehnung, z.B. bei einer Heißabfüllung von Produkten sowie auch bei einer Reinigung und/oder Sterilisation der Behandlungsmaschine ermöglicht werden kann. Der Ausgleich erfolgt durch radiale Verlagerung der Maschinenachse, also des Hauptsterns. Die DE 10 2008 023 776 A1 schlägt weiter vor, dass die festen Rollen an den Tangentenpunkten zwischen Rotor und Transportstern angeordnet sein sollten, so dass sich diese Tangentenpunkte bei Wärmeausdehnung des Rotors nicht verlagern.

Der Erfindung liegt die Aufgabe zugrunde, eine Behälterbehandlungsmaschine aufzuzeigen, bei welcher Produktionsunterbrechungen aufgrund betriebsbedingter Veränderungen reduziert sind.

Erfindungsgemäß wird die Aufgabe durch eine Behälterbehandlungsmaschine mit den Merkmalen des Anspruchs 1 gelöst.

Vorteilhaft im Sinne der Erfindung ist, wenn zumindest zwischen zwei benachbarten Sternen ein Antriebselement vorgesehen ist, mittels welchem die beiden direkt benachbarten Sterne relativ zueinander bewegbar sind, wobei jeweilige Mitten der beiden benachbarten Sterne gemäß einer ermittelbaren betriebsbedingten Abweichung während des Betriebes der Behälterbehandlungsmaschine relativ zueinander bewegbar sind.

Mit der erfindungsgemäßen Ausführung der Behälterbehandlungsmaschine kann unverzüglich auf sich ändernde Betriebsparameter reagiert werden, ohne, dass einstellbedingte oder anpassbedingte Produktionsausfälle, durch unterbrechend des Behälterflusses bzw. durch Anhalten der Sterne befürchtet werden müssen. Denn das Antriebselement ermöglicht eine stetige Anpassung an Änderungen, insbesondere an thermisch bedingte Veränderungen der Behälterbehandlungsmaschine bzw. deren Komponenten in ihrer Position zueinander während des Betriebes, ohne diesen zu unterbrechen. Insbesondere thermisch bedingte Durchmesseränderungen sind mit der Erfindung während des Betriebes ausgleichbar. Zielführend ist dabei, dass trotz der relativen Bewegung der Komponenten zueinander, der Übergabepunkt der einzelnen Sterne zueinander, also der Tangentenpunkt ortstabil bleibt, was sich auch vorteilhaft auf eine Reduzierung an Behälterbeschädigungen auswirkt.

Um während des Betriebes Änderungen, insbesondere thermisch bedingte Änderungen der Sterne ausgleichen zu können, wird zweckmäßiger Weise vorgeschlagen, Messelemente vorzusehen, welche beispielsweise als Temperatursensor und/oder Wegemesssystem ausgeführt sein können. Ein Temperatursensor beispielsweise kann direkt an den Hauptstern angeordnet sein, um so die aktuelle Temperatur aufzunehmen, aus welcher sich physikalischen Gesetzen folgend eine Durchmesseränderung ergibt. Natürlich kann auch an jedem anderen Stern ein Temperatursensor angeordnet werden. Der Temperatursensor ist dabei günstiger Weise auf einer Ober- und/oder Unterseite des Sterns angeordnet. Zusätzlich oder für sich allein kann das Wegemesssystem vorgesehen sein, welches zweckmäßiger Weise beabstandet zu einem Rand des Sterns angeordnet ist, um so dessen thermisch bedingte Umfangsänderung über die sich ändernde Wegstrecke zu erfassen. Zudem können die Messelemente auch als Abstandssensoren ausgeführt sein, welche die Abstände benachbarter Sterne und/oder Behälterbehandlungsmaschinen, bzw. Teilflächen von diesen aufnehmen. So kann die Behälterübergabe direkt kontrolliert werden.

Zielführend ist, wenn die Messelemente mit einer entsprechenden Steuervorrichtung in Verbindung stehen, bzw. die Messwerte an die Steuervorrichtung leiten. Dies kann drahtgebunden oder drahtlos erfolgen, wobei die jeweiligen Übertragungsarten generell bekannt sind. Die Steuervorrichtung ermittelt aus den Messwerten die resultierende bzw. vorliegende Durchmesseränderung bzw- betriebsbedingte Veränderung der Behälterübergabe und generiert daraus entsprechende Steuersignale für das Antriebselement, so dass eine Relativbewegung der Sterne über das Antriebselement zueinander bewirkt werden kann, um die Durchmesseränderung bzw. die betriebsbedingte Änderung der Behälterübergabe auszugleichen. Die Steuervorrichtung hat also zudem eine Auswertefunktion, wobei die zugeleiteten Messwerte in entsprechende Durchmesseränderungen bzw. Änderungen der Behälterübergabe umgewandelt werden, aus denen sodann die Steuersignale zur Aktivierung des Antriebselementes erzeugt und zu dem Antriebselement geleitet werden. Die Steuersignale können natürlich ebenso drahtgebunden oder drahtlos übermittelt werden.

Insofern ist es zielführend, wenn das Antriebselement in Abhängigkeit von der Betriebstemperatur der Behälterbehandlungsmaschine bzw. deren Sterne gesteuert wird, da die Temperatur sich direkt auf eine Durchmesseränderung bzw. auf die Veränderung der Behälterübergabe auswirkt. Vorteilhaft ist also, wenn die Wärmeausdehnung aufgenommen wird, und/oder wenn die Temperatur aufgenommen wird, aus welcher die Wärmeausdehnung ermittelt wird. Natürlich kann auch die Temperatur des Mediums, beispielsweise des Reinigungsmediums aufgenommen werden, aus welcher sich dann die Durchmesseränderung bzw. die thermisch bedingte Veränderung der Übergabe bestimmen lässt.

Um die beiden Sterne relativ zueinander bewegbar auszuführen, ist zweckmäßiger Weise vorgesehen, das Antriebselement an einer Führung anzuordnen, welche Führung zwischen den beiden Sternen angeordnet ist. Beispielsweise könnte die Führung zwischen dem Hauptstern bzw. dem Hauptkarussell und dem benachbarten Transportstern angeordnet und beide miteinander relativ zueinander bewegbar verbinden. Denkbar ist hier eine Linearführung, welche unterhalb der Sternebene an einem jeweiligen Gestell angreift. Das Antriebselement kann über die so gebildete Linearführung betriebsbedingte Änderungen ausgleichen, in dem beide Sterne relativ zueinander verschoben werden.

Die Linearführung kann zum Beispiel auch unter dem Drehkranz des Hauptsterns, bzw. des Karussells angeordnet sein. Die Linearführung kann aber auch an den Füßen des Gestells bzw. an dem Gestell unterhalb der Sterne angreifen. Grundsätzlich kann die Linearführung motorisch angetrieben sein. In diesem Falle kann das Antriebselement ein Elektromotor, oder ein hydraulisch bzw. pneumatisch wirkender Motor mit einer Steuersignalempfangseinheit sein.

In denkbarer Ausgestaltung kann vorgeschlagen werden, die Sterne zu Verdrehen. Möglich ist beispielsweise, den einen Stern zentrisch um die Mitte des anderen Sterns zu drehen, um die Veränderungen auszugleichen.

In weiter möglicher Ausführung kann die Relativbewegung über ein thermisch wirkendes Antriebselement erzeugt werden. Günstiger Weise ist das Antriebselement dabei ein Verbindungsträger zwischen den beiden Sternen welcher erwärmt wird, um so die Veränderungen auszugleichen.

In weiter möglicher Ausgestaltung, kann vorgesehen sein, dass das Antriebselement nur den Hauptstern nachführt, und/oder nur den jeweiligen Transportstern nachführt, und/oder alle Komponenten gemeinsam abgestimmt aufeinander nachführt.

In bevorzugter Ausgestaltung ist vorteilhaft vorgesehen, dass der von dem Temperaturbetrag wärmere Stern bzw. die vom Temperaturbetrag wärmere Behälterbehandlungsmaschine relativ zu den vom Temperaturbetrag kälteren Komponenten bzw. Maschinen relativ bewegbar nachgeführt wird. Beispielsweise kann die Kompensation der Wärmeausdehnung bei einer Füllmaschine (bei Heißfüllung) durch ein tangentiales Verschieben der Sterne zu den kalten Sternen erfolgen. Denkbar ist aber auch ein erschwenken der Sterne um die Mittelpunkte der kalten Sterne, um auch einen Teilungsfehler zu kompensieren.

Günstig ist aber auch, wenn zusätzlich zur Kompensation der thermisch bedingten Veränderungen mittels des Antriebselementes noch Flaschengreifer oder -aufnahmeelemente federnd ausgeführt sind, so dass auch diese Flaschengreifer oder -aufnahmeelemente die thermisch bedingte Veränderung kompensieren könnten. Dabei kann eine oder mehrere radial ausgerichtete Federn an dem Flaschengreifer oder -aufnahmeelemente angreifend ein radiales Verschieben bewirken. Zusätzlich kann eine quer dazu angreifende Feder vorgesehen werden, die eine Kompensation des Teilungsfehlers bewirkt. Federelemente sind dabei bevorzugt so ausgeführt, dass diese bei Wärmedehnung vorzugsweise nachgeben, also zusammengedrückt werden. Natürlich können die Flaschengreifer auch in sich elastisch nachgiebig ausgeführt sein, wobei auf externe Federelemente verzichtet werden könnte. Der Flaschengreifer selbst wäre dann quasi als Federelement mit Greiferfunktion ausführbar.

Mit der Erfindung wird so erreicht, dass sich die Behälterbehandlungsmaschine an thermisch bedingte Veränderungen insbesondere hinsichtlich der Übergabestationen anpasst, wobei eine Produktionsunterbrechung entfallen kann. Günstig ist auch, dass zugleich eine einfache Anpassung an unterschiedliche Behälterformate möglich ist. Hierzu können die Antriebselemente die Behälterübergaben bei einem Behälterformatwechsel anpassen, wenn diese ein entsprechendes Steuersignal erhalten. Das Steuersignal kann dabei von der Steuervorrichtung generiert werden, welche entsprechende Eingangssignale manuell oder automatisch erhält.

Weitere vorteilhafte Ausgestaltungen der Erfindung sind in den Unteransprüchen und der folgenden Figurenbeschreibung offenbart. Es zeigen
Fig.1 eine Behälterbehandlungsmaschine beispielhaft als Füllmaschine,
Fig.2 eine Behälterbehandlungsmaschine beispielhaft als Rinser,
Fig.3 eine Behälterbehandlungsmaschine in prinzipieller Ansicht, bei welcher Transportsterne relativ zum Hauptkarussell verdrehbar sind und,
Fig.4 eine Behälterbehandlungsmaschine in prinzipieller Ansicht, bei welcher das Hauptkarussell relativ zu den Transportsternen verschiebbar ist

In den unterschiedlichen Figuren sind gleiche Teile stets mit denselben Bezugszeichen versehen, weswegen diese in der Regel auch nur einmal beschrieben werden.

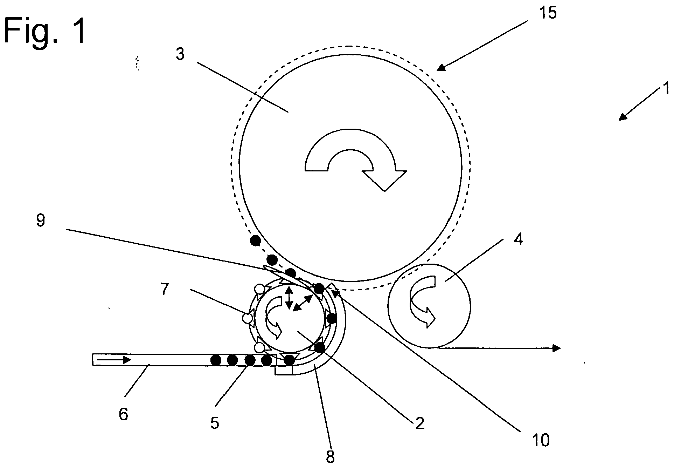

Figur 1 zeigt eine Behälterbehandlungsmaschine 1, welche beispielhaft als Füllmaschine oder Füller ausgeführt ist. Diese ist im Allgemeinen bekannt.

Die Behälterbehandlungsmaschine 1 weist Transportsterne 2, 3 und 4, also einen Einleitstern 2, einen Hauptstern 3 und einen Ausleitstern 4 auf. Dem Einleitstern 2 werden Behälter 5 auf einem Förderer 6 zugeführt. Die Behälter 5 werden von dem Einleitstern 2 zum Hauptstern 3 oder Füllerkarussell 3 und mit diesem zum Ausleitstern 4 transportiert. An dem Füllerkarussell 3 sind Füllstationen angeordnet.

Beispielsweise kann der Einleitstern 2 als Schiebestern 2 bezeichnet werden, welcher eine Vielzahl von Halteinrichtungen 7 zum Halten der Behälter 5 wie zum Beispiel PET-Flaschen aufweist. In Figur 1 ist anhand der gefüllten Kreise (welche die Behälter 5 darstellen sollen) erkennbar, dass die Behälter 5 mittels der Halteeinrichtungen 7 zum Hauptstern 3 transportiert werden. Nicht belegte Halteeinrichtungen 7 sind in Figur 1 mit ungefüllten Kreisen dargestellt. Die Halteeinrichtungen 7 sind in Figur 1 vereinfacht dargestellt. Beispielhaft ist der Einleitstern 2 teilumfänglich von einer Stützkurve 8 umfasst, auf welcher die Behälter 5 mit ihren Neckring abrutschen können. Zudem sind noch bevorzugt feststehende Überleitelemente 9 vorgesehen.

Die Überleitelemente 9 sind im Bereich der Behälterübergaben 10 angeordnet, bei welcher die Behälter 5 von dem Einleitstern 2 zum Hauptstern 3 gegeben werden.

Analog kann die Übergabe vom Hauptstern 3 zum Ausleitstern 4 ausgeführt sein, wobei der Ausleitstern analog zum Einleitstern 2 ausführbar ist.

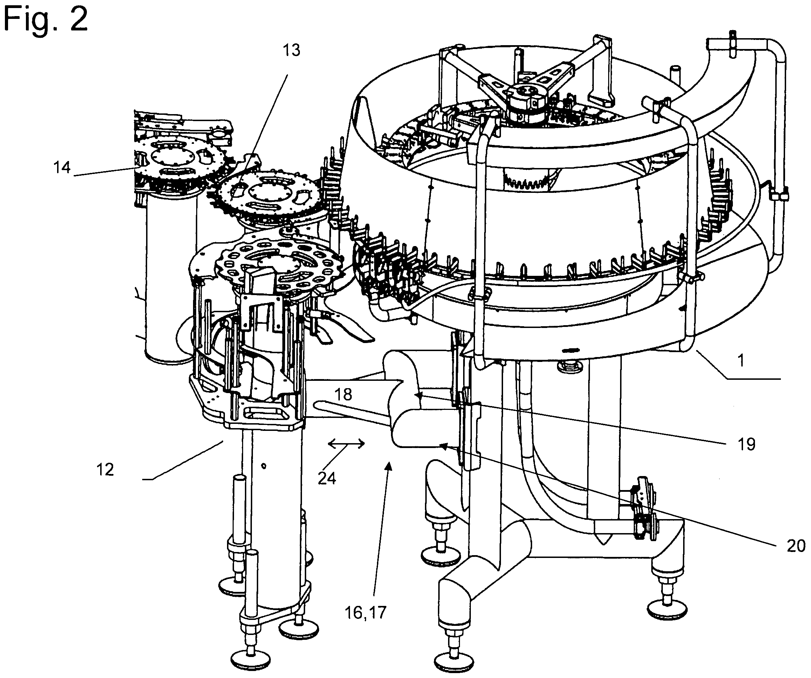

Figur 2 dagegen zeigt eine Behälterbehandlungsmaschine 1, welche beispielhaft als Rinser ausgeführt ist. Der Rinser weist einen Hauptstern 11 bzw. das Hauptkarussell 11, sowie beispielhaft einen Einleitstern 12 und Transportsterne 13, 14 auf.

Die Behälterbehandlungsmaschinen 1 können betriebsbedingten Veränderungen, insbesondere thermischen Veränderungen unterliegen, wobei sich eine thermisch bedingte Durchmesserveränderung ergeben kann, welche in den Figuren 1, 3 und 4 mittels der unterbrochenen Linie 15 dargestellt ist.

Diese Durchmesseränderung ist mit der Erfindung ausgleichbar, indem zumindest ein Antriebselement 16 vorgesehen wird, welches zwischen zwei benachbarten Sternen angeordnet ist, mittels welchem die beiden direkt benachbarten Sterne relativ zueinander bewegbar sind, wobei jeweilige Mitten X der beiden benachbarten Sterne gemäß einer ermittelbaren betriebsbedingten Abweichung während des Betriebes der Behälterbehandlungsmaschine 1 relativ zueinander bewegbar sind.

Beispielhaft ist in Figur 2 ein mechanisch wirkendes Antriebselement 16 in der Ausgestaltung als Linearführung 17 dargestellt. Die Linearführung 17 ist Gabelartig mit einem Hauptsteg 18 und einem sich daran anschließenden U-förmigen Profil mit einem Basisschenkel 19 und zwei U-Schenkeln 20 ausgeführt.

Die U-Schenkel 20 stehen jeweils endseitig mit einem Gestell des Rinsers in Verbindung, wobei der Basisschenkel 19 an dem Hauptsteg 18 befestigt ist, welcher Hauptsteg 18 in dem in Figur 2 dargestellten Ausführungsbeispiel mit dem Gestell des Einleitsterns 12 in Verbindung steht.

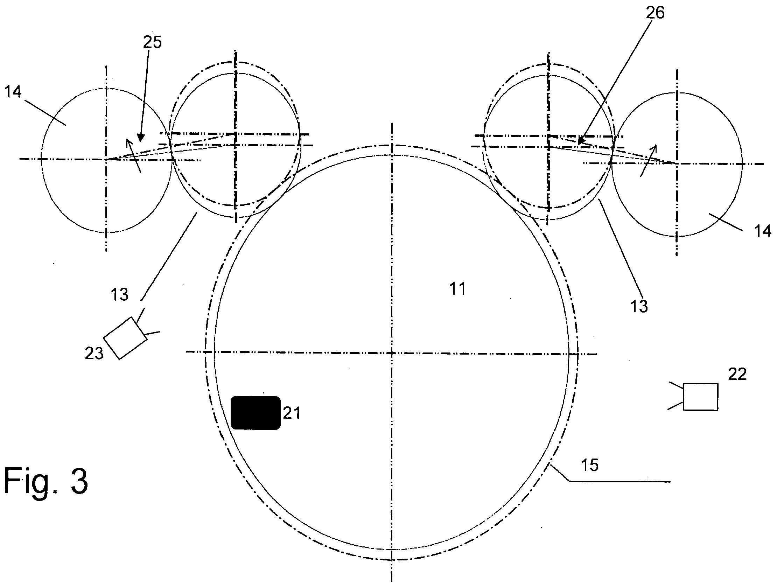

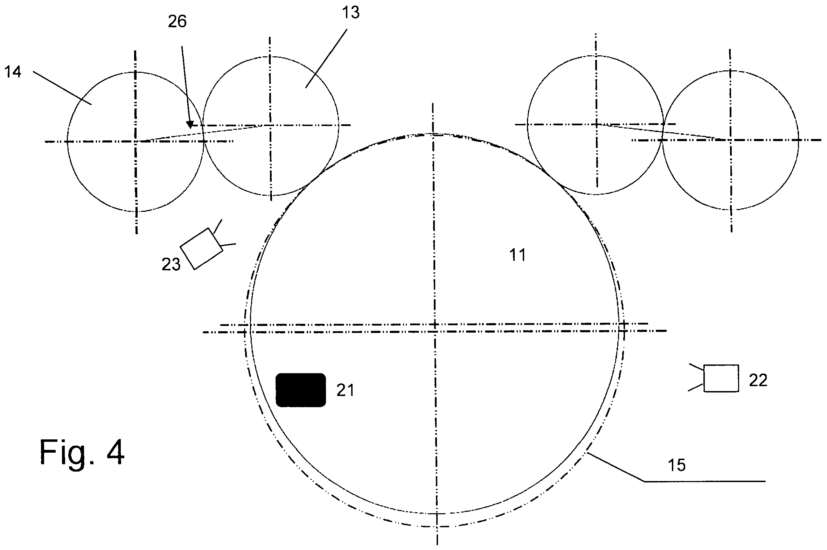

Mittels Messelementen, welche in den Figuren 3 und 4 prinzipiell angeordnet erkennbar sind, und als Temperatursensor 21 und/oder als Wegemesssensor 22 und/oder als Abstandssensor 23 ausführbar sind, kann nun beispielsweise die Temperatur des Hauptsterns 11 aufgenommen werden. Die Sensoren 22 und 23 sind lediglich beispielhaft mit einem Kamerasymbol dargestellt. Bevorzugt ist eine optische Überwachung, ohne, dass dies beschränkend sein soll. Natürlich können an allen Sternen bzw. Übergaben Sensoren 21, 22 und/oder 23 vorgesehen sein, wobei in den Figuren 3 und 4 lediglich jeweils ein Sensor 21, 22 und 23 gezeigt ist.

Hierzu ist der Temperatursensor 21 in Messverbindung mit dem Hauptstern 11. Die Messewerte werden einer nicht dargestellten Steuervorrichtung zugeleitet, welche aus dem Temperaturbetrag einen entsprechenden Durchmesserbetrag ermittelt, wobei von der Steuervorrichtung ein korrespondierendes Steuersignal generiert und an das Antriebselement 16 geleitet wird, welche so die Übergabe 10 an die betriebsbedingte Durchmesseränderung anpasst. Ein Verstellen ist mittels des Doppelpfeils 24 in Figur 2 erkennbar.

Selbstverständlich können Antriebselemente auch an den weiteren Sternen angeordnet werden.

In den Figuren 3 und 4 ist die Behälterbehandlungsmaschine 1 ebenfalls lediglich beispielhaft als Rinser ausgeführt, wobei lediglich die Transportsterne 13, 14 und das Hauptkarussell 16 dargestellt sind.

Bei dem in Figur 3 gezeigten Ausführungsbeispiel wird ein betriebsbedingter Durchmesserausgleich mittels des Antriebselementes erreicht, indem die Transportsterne 13 verdreht werden. Dabei wird der Transportstern 13 um die Mitte des Transportsterns 14 verdreht, was mittels des Pfeils 25 und der sich verlagerten Verbindungslinie 26 beider Mitten X der Transportsterne 13 und 14 erkennbar ist.

Bei dem in Figur 4 wird dagegen das Hauptkarussell 11 verschoben, um eine Kompensation der Durchmesseränderung zu erreichen.

Natürlich können sowohl Hauptstern als auch die Transport- bzw. Einleitsterne aufeinander abgestimmt verdreht werden. Günstig ist auch eine Kombination von Linearführung und/oder Schwenkendem Ausgleich. Insofern kann jedem Stern ein Antriebselement zugeordnet werden, welches mit der Steuervorrichtung in Verbindung steht, und entsprechende Steuersignale erhält.

### Bezugszeichenliste:

### Bezugszeichenliste

- 1: Behälterbehandlungsmaschine
- 2: Transportstern/Einleitstern
- 3: Hauptstern
- 4: Transportstern/Ausleitstern
- 5: Behälter
- 6: Förderer
- 7: Halteeinrichtung
- 8: Stützkurve
- 9: Überleitelemente
- 10: Behälterübergabe
- 11: Hauptstern
- 12: Einleitstern
- 13: Transportstern
- 14: Transportstern
- 15: Thermisch bedingte Durchmesserveränderung
- 16: Antriebselement
- 17: Linearführung
- 18: Hauptsteg
- 19: Basisschenkel
- 20: U-Schenkel
- 21: Temperatursensor
- 22: Wegemesssensor
- 23: Abstandssensor
- 24: Doppelpfeil
- 25: Pfeil
- 26: Verbindungslinie

## Patentansprüche

1. Behälterbehandlungsmaschine, für Flaschen oder dergleichen Behälter, aufweisend Transportsterne (2,3; 12,13,14) und zumindest einen Hauptstern (3, 11), an welchem einen Vielzahl von Behandlungsstationen angeordnet sind, wobei die jeweiligen Sterne eine Vielzahl von Halte- und/oder Greifpositionen für jeweils einen Behälter (5) aufweisen, wobei zwischen benachbarten Sternen mindestens eine Behälterübergabestation (10) vorhanden ist, **dadurch gekennzeichnet, dass** zumindest ein Antriebselement (16) vorgesehen wird, welches zwischen mindestens zwei benachbarten Sternen angeordnet ist, mittels welchem mindestens zwei direkt benachbarte Sterne relativ zueinander bewegbar sind, wobei jeweilige Mitten (X) der benachbarten Sterne gemäß einer ermittelbaren betriebsbedingten Abweichung während des Betriebes der Behälterbehandlungsmaschine (1) relativ zueinander bewegbar sind.

2. Behälterbehandlungsmaschine nach Anspruch 1, **dadurch gekennzeichnet, dass** Messelemente (21,22,23) vorgesehen sind, welche als Temperatursensor (21), als Wegemesssensor (22) und/oder als Abstandssensor ausgeführt sind.

3. Behälterbehandlungsmaschine nach Anspruch 1 oder 2, **dadurch gekennzeichnet, dass** Messelemente (21) vorgesehen sind, welche mit einer Ober- und/oder Unterseite der Sterne (2,3,4,11,12,13,14) in Messverbindung stehen.

4. Behälterbehandlungsmaschine nach einem der vorhergehenden Ansprüche, **dadurch gekennzeichnet, dass** das Antriebselement (16) über eine Steuervorrichtung regelbar ist.

5. Behälterbehandlungsmaschine nach einem der vorhergehenden Ansprüche, **dadurch gekennzeichnet, dass** Messelemente (21,22,23) zur Detektion betriebsbedingter Veränderungen vorgesehen sind, welche mit einer Steuervorrichtung in Verbindung stehen, welche Steuervorrichtung aus den Messwerten der Messelemente (21,22,23) Steuersignale zur Steuerung des Antriebselementes (16) generiert.

6. Behälterbehandlungsmaschine nach einem der vorhergehenden Ansprüche, **dadurch gekennzeichnet, dass** das Antriebselement (16) an einer Führung zwischen einander benachbarten Sternen (2,3,4,11,12,13,14) angeordnet ist.

7. Behälterbehandlungsmaschine nach einem der vorhergehenden Ansprüche, **dadurch gekennzeichnet, dass** das Antriebselement (16) als Komponente eine Linearführung (17) ausgeführt ist, welche unterhalb der Sternebene angreift.

8. Behälterbehandlungsmaschine nach einem der vorhergehenden Ansprüche, **dadurch gekennzeichnet, dass** das Antriebselement (16) an einem Gestell der jeweiligen Sterne (2,3,4,11,12,13,14) angreift.

9. Behälterbehandlungsmaschine nach einem der vorhergehenden Ansprüche, **dadurch gekennzeichnet, dass** das Antriebselement (16) als Elektromotor ausgeführt ist.

10. Behälterbehandlungsmaschine nach einem der vorhergehenden Ansprüche, **dadurch gekennzeichnet, dass** das Antriebselement (16) einen Steuersignalempfangseinheit aufweist.

11. Behälterbehandlungsmaschine nach einem der vorhergehenden Ansprüche, **dadurch gekennzeichnet, dass** das Antriebselement (16) in Abhängigkeit einer Betriebstemperatur gesteuert wird.

## Claims

1. Container handling machine for bottles or similar containers, comprising transport stars (2, 3; 12, 13, 14) and at least one primary star (3, 11) on which a plurality of handling stations are arranged, wherein the respective stars comprise a plurality of holding and/or gripping positions for a respective container (5), wherein at least one container transfer station (10) is provided between adjacent stars, **characterised in that** at least one drive element (16) is provided, which is arranged between at least two adjacent stars, by means of which at least two directly adjacent stars can be moved relative to one another, wherein respective centres (X) of adjacent stars are movable relative to each other according to a determinable deviation due to operating conditions during the operation of the container handling machine (1).

2. Container handling machine according to claim 1, **characterised in that** measuring elements (21, 22, 23) are provided, which are configured as temperature sensor (21), as path measuring sensor (22), and/or spacing interval sensor.

3. Container handling machine according to claim 1 or 2, **characterised in that** measuring elements (21) are provided which are in measuring contact with an upper side and/or lower side (2, 3, 4, 11, 12, 13, 14)

4. Container handling machine according to any one of the preceding claims, **characterised in that** the drive element (16) can be regulated by means of a control device.

5. Container handling machine according to any one of the preceding claims, **characterised in that** measuring elements (21, 22, 23) are provided for the detection of changes due to operating conditions, which are in connection with a control device, which control device generates, from the measured values of the measuring elements (21, 22, 23), control signals for controlling the drive element (16).

6. Container handling machine according to any one of the preceding claims, **characterised in that** the drive element (16) is arranged on a guide element between adjacent stars (2, 3, 4, 11, 12, 13, 14).

7. Container handling machine according to any one of the preceding claims, **characterised in that** the drive element (16) is configured as a component of a linear guide (17), which engages beneath the plane of the stars.

8. Container handling machine according to any one of the preceding claims, **characterised in that** the drive element (16) engages at a frame of the respective stars (2, 3, 4, 11, 12, 13, 14).

9. Container handling machine according to any one of the preceding claims, **characterised in that** the drive element (16) is configured as an electric motor.

10. Container handling machine according to any one of the preceding claims, **characterised in that** drive element (16) comprises a control signal reception unit.

11. Container handling machine according to any one of the preceding claims, **characterised in that** the drive element (16) is controlled as a function of an operating temperature.

## Revendications

1. Machine de traitement de contenants pour des bouteilles ou des contenants similaires, présentant des systèmes de transport en étoile (2, 3 ; 12, 13, 14) et au moins un système en étoile principal (3, 11), au niveau duquel une pluralité de stations de traitement sont disposées, dans laquelle les systèmes en étoile respectifs présentent une pluralité de positions de maintien et/ou de préhension pour respectivement un contenant (5), dans laquelle au moins une station de transfert de contenants (10) est présente entre des systèmes en étoile adjacents, **caractérisée en ce qu'**au moins un élément d'entraînement (16) est prévu, lequel est disposé entre au moins deux systèmes en étoile adjacents, au moyen duquel au moins deux systèmes en étoile directement adjacents peuvent être déplacés l'un par rapport à l'autre, dans laquelle des centres (X) respectifs des systèmes en étoile adjacents peuvent être déplacés les uns par rapport aux autres selon un écart lié au fonctionnement, pouvant être déterminé au cours du fonctionnement de la machine de traitement de contenants (1).

2. Machine de traitement de contenants selon la revendication 1, **caractérisée en ce que** des éléments de mesure (21, 22, 23) sont prévus, lesquels sont réalisés sous la forme d'un capteur de température (21), sous la forme d'un capteur de mesure de distances (22) et/ou sous la forme d'un capteur d'espacement.

3. Machine de traitement de contenants selon la revendication 1 ou 2, **caractérisée en ce que** des éléments de mesure (21) sont prévus, lesquels se trouvent en liaison de mesure avec un côté supérieur et/ou un côté inférieur des systèmes en étoile (2, 3, 4, 11, 12, 13, 14).

4. Machine de traitement de contenants selon l'une quelconque des revendications précédentes, **caractérisée en ce que** l'élément d'entraînement (16) peut être réglé par l'intermédiaire d'un dispositif de commande.

5. Machine de traitement de contenants selon l'une quelconque des revendications précédentes, **caractérisée en ce que** des éléments de mesure (21, 22, 23) sont prévus aux fins de la détection de modifications liées au fonctionnement, lesquels sont reliés à un dispositif de commande, qui génère, à partir des valeurs de mesure des éléments de mesure (21, 22, 23), des signaux de commande servant à commander l'élément d'entraînement (16).

6. Machine de traitement de contenants selon l'une quelconque des revendications précédentes, **caractérisée en ce que** l'élément d'entraînement (16) est disposé au niveau d'un guidage entre des systèmes en étoile (2, 3, 4, 11, 12, 13, 14) adjacents les uns aux autres.

7. Machine de traitement de contenants selon l'une quelconque des revendications précédentes, **caractérisée en ce que** l'élément d'entraînement (16) est réalisé sous la forme d'un guidage linéaire (17), qui s'engage sous le plan de système en étoile.

8. Machine de traitement de contenants selon l'une quelconque des revendications précédentes, **caractérisée en ce que** l'élément d'entraînement (16) s'engage au niveau d'un châssis des systèmes en étoile (2, 3, 4, 11, 12, 13, 14) respectifs.

9. Machine de traitement de contenants selon l'une quelconque des revendications précédentes, **caractérisée en ce que** l'élément d'entraînement (16) est réalisé sous la forme d'un moteur électrique.

10. Machine de traitement de contenants selon l'une quelconque des revendications précédentes, **caractérisée en ce que** l'élément d'entraînement (16) présente une unité de réception de signaux de commande.

11. Machine de traitement de contenants selon l'une quelconque des revendications précédentes, **caractérisée en ce que** l'élément d'entraînement (16) est commandé en fonction d'une température de fonctionnement.
